# EUROPEAN PATENT SPECIFICATION

(11) **EP 3 779 615 B1**
(45) Date of publication and mention of the grant of the patent: **20.03.2024**
(21) Application number: 19784777.5
(22) Date of filing: 27.03.2019
(51) Int. Cl.: G05B 13/02, G05B 23/02, H01H 47/00

(54) **ABNORMALITY DETECTION DEVICE, ABNORMALITY DETECTION METHOD, AND ABNORMALITY DETECTION PROGRAM**
ANOMALITÄTSDETEKTIONSVORRICHTUNG, ANOMALITÄTSDETEKTIONSVERFAHREN UND ANOMALITÄTSDETEKTIONSPROGRAMM
DISPOSITIF DE DÉTECTION D'ANOMALIE, PROCÉDÉ DE DÉTECTION D'ANOMALIE, ET PROGRAMME DE DÉTECTION D'ANOMALIE

(30) Priority: 09.04.2018 JP 2018074356
(43) Date of publication of application: 17.02.2021
(73) Proprietor: Omron Corporation, Kyoto-shi, Kyoto 600-8530 (JP)
(72) Inventor: SUGANUMA Hiromu, Kyoto 619-0283 (JP); TAKUMA Nobuyuki, Kyoto 619-0283 (JP); FUJIMURA Ryosuke, Kyoto 619-0283 (JP); KUBO Hiroko, Kyoto 619-0283 (JP)
(74) Representative: Carstens, Dirk Wilhelm
(86) International application number: PCT/JP2019/013072
(87) International publication number: WO 2019/198502

(56) References cited:
- JP-A- 2001 255 934
- JP-A- 2007 304 939
- JP-A- 2010 055 652
- JP-A- 2010 180 636
- JP-A- 2011 528 151
- US-A1- 2009 204 232
- US-A1- 2009 241 014
- US-A1- 2010 063 754
- US-A1- 2010 063 754
- US-A1- 2013 270 423

## Description

### BACKGROUND

### Technical Field

The present invention relates to a technique for detecting an abnormality of a safety device that is connected to a safety controller and has a plurality of channels for outputting a signal according to a state.

### Related Art

Conventionally, in a factory automation system (FA system) constructed at a manufacturing site where the manufacturing of products is performed, various types of industrial machines such as a press machine, a cutter, a grinder, a welder, and an industrial robot are controlled by a programmable controller (PLC) (see non-patent literature 1). In addition, in the FA system, machine control for controlling the industrial machines is combined with safety control for ensuring safety at the manufacturing site. The safety control is a control that limits the operations of the industrial machines and safely stops the industrial machines unless the safety is ensured.

In the safety control, safety devices such as an emergency stop button, a safety light curtain, and a safety mat are used to judge whether the safety is ensured. For example, when the emergency stop button is pressed, or when an intruder entering a controlled area is detected by the safety light curtain or the safety mat, it is not judged that the safety is secured. The safety device is connected to the PLC that performs safety control (herein, this PLC is referred to as a safety controller).

In addition, in a general FA system, a dual-output safety device (safety device including two output channels) is used to thereby suppress a reduction in the safety caused by an abnormality of a safety device.

### [Literature of related art]

### [Patent literature]

Non-Patent Literature 1: http://www.fa.omron.co.jp/data_pdf/cat/devicenetsafety_sjlb-001_4_13.pdf?id=1626
Attention is drawn to document US 2013/270423 A1 which relates to an inter-optical-axis indication unit which is arranged between two adjacent optical axes so as not to interfere with the optical axis located in a lower end portion of a receiver. The inter-optical-axis indication unit is capable of displaying at least one piece of information out of a control input state, a safe special function state, a synchronization type, and an interlock state.

### SUMMARY

### [Problems to be Solved]

However, when an abnormality occurs in the dual-output safety device, the output of one channel and the output of the other channel may be different. In the FA system, from the viewpoint of suppressing the reduction in safety, safety control is performed by the safety controller and the line is stopped in this case.

In order to reduce the stop time of the line, it is necessary to quickly specify the safety device in which an abnormality has occurred and the content of the abnormality that has occurred and eliminate the abnormality.

An objective of the present invention is to provide a technique for quickly specifying, among the safety devices connected to the safety controller, the safety device in which an abnormality has occurred and the content of the abnormality that has occurred.

### [Means to Solve Problems]

The present invention is defined by the appended independent claims. Further embodiments of the invention are defined by the appended dependent claim 2. In order to achieve the above objective, the abnormality detection device of the present invention is configured as follows.

An abnormality detection device according to the present invention detects an abnormality of a safety device that is connected to a safety controller and has a plurality of channels for outputting a signal according to a state. A determination unit acquires an output of each channel of the safety device from the safety controller, and determines whether an abnormality occurs in the safety device depending on whether the output of each channel is the same. In addition, an estimation unit estimates, for the safety device for which occurrence of the abnormality has been determined by the determination unit, the channel having an abnormal output. Then, a display unit displays, on a display, a screen including an image showing a diagram of wiring between the safety controller and the safety device for which the occurrence of the abnormality has been determined by the determination unit. In the image, the channel estimated to have an abnormal output by the estimation unit is distinguished from other channels.

Accordingly, by confirming the screen displayed on the display, an operator or the like can quickly specify, among the safety devices connected to the safety controller, the safety device in which an abnormality has occurred and the content of the abnormality that has occurred. Thereby, the stop time of the line is suppressed.

In addition, the abnormality detection device is configured such that characteristic information indicating a relationship between the state of the safety device and the output of each channel is stored in a characteristic information storage unit, and the estimation unit uses the characteristic information to estimate the channel having an abnormal output.

Furthermore, the abnormality detection device may be configured such that for each channel of the safety device for which the occurrence of the abnormality has been determined by the determination unit, and the display unit displays a screen including an image showing an output of the channel on the display.

### [Effect]

According to the present invention, it is possible to quickly specify, among the safety devices connected to the safety controller, the safety device in which an abnormality has occurred and the content of the abnormality that has occurred.

### BRIEF DESCRIPTION OF THE DRAWINGS

FIG. 1 is a schematic diagram showing a Factory Automation System (FA system).
FIG. 2 is a block diagram showing the configuration of a main unit of a safety controller.
FIG. 3 is a block diagram showing the configuration of a main unit of an information processing device.
FIG. 4 is a diagram showing characteristic information stored in a characteristic information storage unit.
FIG. 5 is a flowchart showing an operation of the information processing device.
FIG. 6(A) and FIG. 6(B) are confirmation screens displayed on a display.
FIG. 7 is a schematic diagram showing a factory automation system (FA system) according to another example.

### DESCRIPTION OF THE EMBODIMENTS

Hereinafter, a wiring check device that is an embodiment of the present invention is described in detail.

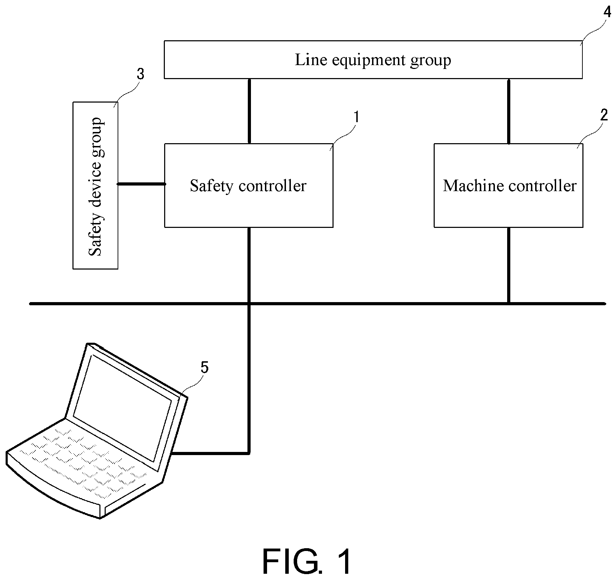

FIG. 1 is a schematic diagram showing a factory automation system (FA system) using an abnormality detection device according to the present invention. The FA system is constructed at a manufacturing site or the like where the manufacturing of products is performed. The FA system includes a safety controller 1, a machine controller 2, a safety device group 3, a line equipment group 4, and an information processing device 5. The safety controller 1 and the machine controller 2 constitute a programmable logic controller (PLC). The safety controller 1 mainly executes a program for ensuring the safety of workers on the line. The machine controller 2 mainly executes a program for manufacturing products on the line.

The safety device group 3 shown in FIG. 1 collectively illustrates a plurality of safety devices. Safety devices such as an emergency stop button, a safety light curtain, and a safety mat belong to the safety device group 3. In addition, the line equipment group 4 shown in FIG. 1 collectively illustrates a plurality of line equipment that performs conveyance or processing for product manufacturing. Line equipment such as a press machine, a cutter, a grinder, a welder, and an industrial robot belongs to the line equipment group 4.

The information processing device 5 detects (determines) whether an abnormality occurs for each safety device belonging to the safety device group 3 connected to the safety controller 1. In addition, the information processing device 5 displays, for the safety device for which the occurrence of an abnormality has been detected, a screen showing the content of the abnormality. The information processing device 5 can be realized by a known personal computer (PC) and corresponds to the abnormality detection device of the present invention. In addition, the computer included in the information processing device 5 executes an abnormality detection method according to the present invention. Furthermore, an abnormality detection program according to the present invention is installed on the computer included in the information processing device 5.

In FIG. 1, the information processing device 5 is connected to the safety controller 1 and the machine controller 2 via a network, but may also be connected via a serial interface such as USB or RS-232C. In addition, the information processing device 5 may be individually connected to the safety controller 1 and the machine controller 2 (that is, the FA system in this example may include two information processing devices 5, one of which is connected to the safety controller 1 and the other of which is connected to the machine controller 2). In this case, the information processing device 5 connected to the safety controller 1 corresponds to the abnormality detection device according to the present invention.

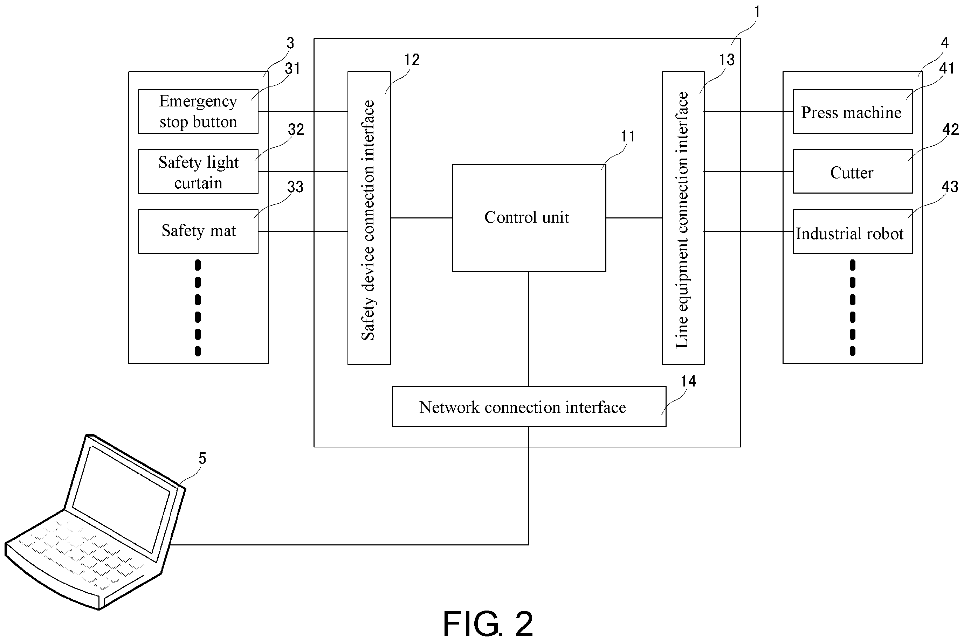

FIG. 2 is a block diagram showing the configuration of a main unit of the safety controller. The safety controller 1 includes a control unit 11, a safety device connection interface 12 (hereinafter referred to as a safety device connection I/F 12), a line equipment connection interface 13 (hereinafter referred to as a line equipment connection I/F 13), and a network connection interface 14 (hereinafter referred to as a network connection I/F 14).

The control unit 11 mainly executes a program for ensuring the safety of workers on the line.

Safety devices such as an emergency stop button 31, a safety light curtain 32, and a safety mat 33 belonging to the safety device group 3 are connected to the safety device connection I/F 12. The inputs of the safety devices such as the emergency stop button 31, the safety light curtain 32, and the safety mat 33 connected to the safety device connection I/F 12 are used as variables of the program executed by the control unit 11. In FIG. 2, only three types of safety devices, namely the emergency stop button 31, the safety light curtain 32, and the safety mat 33, are illustrated as the safety devices belonging to the safety device group 3, and it does not mean that other types of safety devices are not connected to the safety device connection I/F 12. In addition, any one or more of the emergency stop button 31, the safety light curtain 32, and the safety mat 33 that are shown may not be connected to the safety device connection I/F 12. The safety devices belonging to the safety device group 3 have dual outputs (include two output channels).

Besides, the safety devices belonging to the safety device group 3 may include a safety device having one output channel, but the safety device having one output channel is excluded from safety devices for which whether an abnormality occurs is detected by the information processing device 5. In addition, the safety devices belonging to the safety device group 3 may include a safety device having three or more output channels, and the safety device having three or more output channels is a safety device for which whether an abnormality occurs is detected by the information processing device 5.

Line equipment such as a press machine 41, a cutter 42, and an industrial robot 43 belonging to the line equipment group 4 are connected to the line equipment connection I/F 13. In this example, the safety controller 1 controls, for each line equipment belonging to the line equipment group 4 connected to the line equipment connection I/F 13, connection/disconnection of the main power supply to the line equipment. That is, when it is not judged that the safety of workers on the line is ensured, the safety controller 1 performs control such as disconnecting the main power supply on the line equipment belonging to the line equipment group 4, and safely stops this line equipment. The safety controller 1 uses the program executed by the control unit 11 to judge whether the safety of workers on the line is ensured.

Besides, the safety controller 1 may be configured to notify, when it is not judged that the safety of workers on the line is secured, the machine controller 2 of that fact, and stops the line equipment after the machine controller 2 transitions the line equipment belonging to the line equipment group 4 to a safe state.

As long as the operation of the line equipment can be allowed when it is judged that the safety of workers on the line is secured, and conversely, the operation of the line equipment can be stopped when it is not judged that the safety of workers on the line is secured, the safety controller 1 may perform control for the line equipment with any method.

In FIG. 2, as the line equipment belonging to the line equipment group 4, only three types of line equipment, namely the press machine 41, the cutter 42, and the industrial robot 43 are illustrated, and it does not mean that other types of line equipment are not connected to the line equipment connection I/F 13. In addition, any one or more of the press machine 41, the cutter 42, and the industrial robot 43 that are shown may not be connected to the line equipment connection I/F 13.

The information processing device 5 is connected to the network connection I/F 14. In the safety controller 1, the program or the like executed by the control unit 11 is input from the information processing device 5 connected to the network connection I/F 14. In addition, the safety controller 1 inputs the state of the program executed by the control unit 11 to the information processing device 5 or inputs, for each safety device belonging to the safety device group 3 connected to the safety device connection I/F 12, the output of the safety device to the information processing device 5.

Besides, although not particularly shown in FIG. 2, the safety controller 1 is connected to the machine controller 2 via the network connection I/F 14.

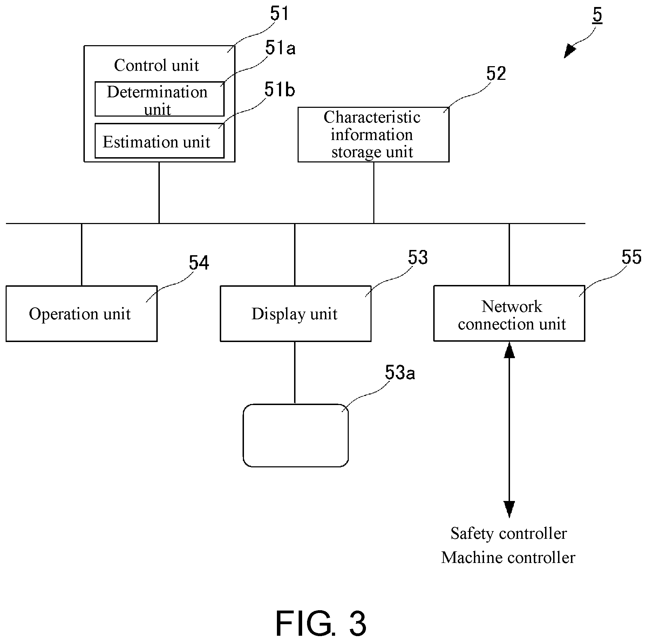

FIG. 3 is a block diagram showing the configuration of a main unit of the information processing device. As described above, the information processing device 5 is a known PC. The information processing device 5 includes a control unit 51, a characteristic information storage unit 52, a display unit 53, an operation unit 54, and a network connection unit 55.

The control unit 51 controls the operation of each unit of the main body of the information processing device 5. The control unit 51 has a determination unit 51a and an estimation unit 51b. The determination unit 51a determines, for each safety device belonging to the safety device group 3, whether an abnormality occurs in the safety device. In addition, the estimation unit 51b estimates, for the safety device for which the occurrence of an abnormality has been determined in the determination unit 51a, the output channel having an abnormal output.

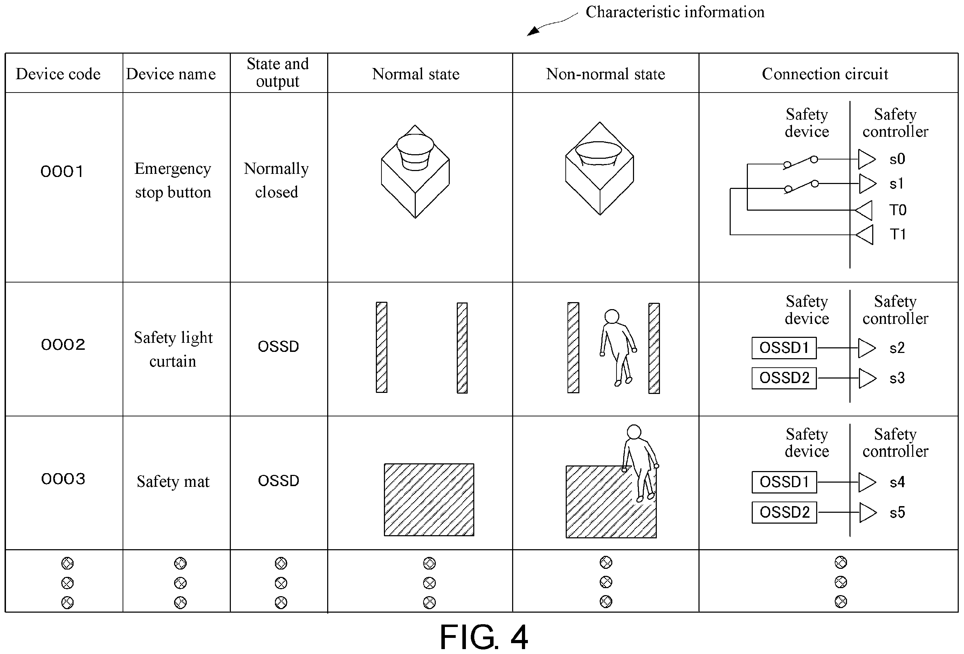

The characteristic information storage unit 52 stores characteristic information for each safety device belonging to the safety device group 3. FIG. 4 is a diagram showing the characteristic information stored by the characteristic information storage unit. As shown in FIG. 4, in the characteristic information, a device code for identifying the safety device, a device name, a relationship between the device state and output (normally closed, normally open, OSSD, and the like), an image of the safety device in the normal state, an image of the safety device in the non-normal state, and a diagram of wiring including an output circuit of the safety device are associated with each other. FIG. 4 illustrates the characteristic information for the emergency stop button 31, the safety light curtain 32, and the safety mat 33. In addition, the characteristic information includes not only the output circuit in the normal state shown in FIG. 4 but also the output circuit in the non-normal state.

Besides, the characteristic information storage unit 52 may stores the characteristic information in any format as long as the device code, the device name, the relationship between the device state and output, the image in the normal state, the image in the non-normal state, and the diagram of wiring including an output circuit of the safety device can be associated with each other. In addition, the safety light curtain 32 and the safety mat 33 are output signal switching devices (OSSD).

The display unit 53 displays a screen on the display 53a to be connected. The operation unit 54 has an input device such as a mouse, a keyboard and a touch panel, and detects an operation of the input device performed by the operator as an input to the main body of the information processing device 5. The network connection unit 55 performs data communication with the safety controller 1 or the machine controller 2 connected via the network.

Similar to a known system, the FA system according to this example is a system that mainly judges whether the safety of workers is ensured by the program executed by the safety controller 1, and controls the line equipment to manufacture a product by the program executed by the machine controller 2. The safety controller 1 judges whether the safety of workers on the line is ensured by the inputs of the safety devices (the emergency stop button 31, the safety light curtain 32, the safety mat 33, and the like) belonging to the safety device group 3, and controls the FA system according to the judgment result.

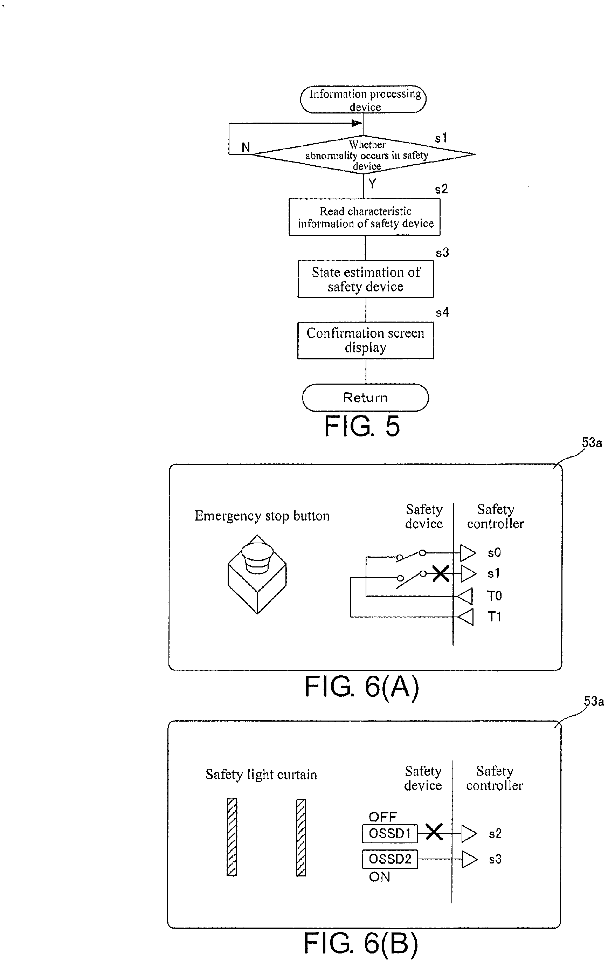

Hereinafter, processing is described in which the information processing device 5 detects the occurrence of an abnormality for each safety device belonging to the safety device group 3. In this processing, the safety devices belonging to the safety device group 3 and having a plurality of output channels are the safety devices being subjected to abnormality detection. That is, the safety device having one output channel is not subjected to this processing even when the safety device belongs to the safety device group 3. FIG. 5 is a flowchart showing an operation of the information processing device.

The information processing device 5 determines whether an abnormality occurs in any one of the safety devices belonging to the safety device group 3 (s1). For each safety device belonging to the safety device group 3, the output of each output channel of the safety device is input to the information processing device 5 from the safety controller 1 connected in the network connection unit 55. For the safety device having the same output in all output channels, the information processing device 5 determines that no abnormality has occurred. On the contrary, for the safety device in which the output is not the same in all output channels, the information processing device 5 determines that an abnormality has occurred. The determination unit 5 la performs determination according to s1.

When it is determined in s1 that there is a safety device in which an abnormality has occurred, the information processing device 5 reads the characteristic information of the safety device from the characteristic information storage unit 52 (s2). The information processing device 5 uses the characteristic information read in s2 to estimate the output channel having an abnormal output (s3). The estimation unit 51b performs estimation according to s2.

In s3, for example, when the output of the safety device is on and off, the estimation unit 51b estimates that the output channel whose output is off has an abnormality caused by disconnection and that the output channel whose output is on has no abnormality. In addition, for each safety device, whether the output of the output channel when the abnormality occurs is on or off may be registered in advance, and the output channel in which an abnormality has occurred may be estimated based on this registration. In this case, for each safety device, the possibility that the output of the output channel in which an abnormality has occurred is turned on and the possibility that the output of the output channel in which an abnormality has occurred is turned off may be compared, and the one with larger possibility may be registered as the output when an abnormality has occurred.

In the information processing device 5, a confirmation screen is generated based on the estimation result of s3, the confirmation screen generated by the display unit 53 is displayed on the display 53a (s4), and the processing returns to s1. FIG. 6(A) and FIG. 6(B) are diagrams showing the confirmation screens displayed on the display in s5. FIG. 6(A) is a confirmation screen when an abnormality has occurred in the emergency stop button 31 having a device code 0001, and FIG. 6(B) is a confirmation screen when an abnormality has occurred in the safety light curtain 32 having a device code 0002.

As shown in FIG. 6(A) and FIG. 6(B), this confirmation screen includes an image showing the state of the safety device in which an abnormality has occurred, and a diagram of wiring including the circuit of the safety device. The states of the safety device (the emergency stop button 31 (FIG. 6(A)) and the safety light curtain 32 (FIG. 6(B))) on the confirmation screen are judged based on the estimation result of s3. That is, if the estimation of the output channel having an abnormal output in s3 is correct, the state of the safety device displayed on the confirmation screen matches the actual state of the safety device at that time. On the contrary, if the estimation of the output channel having an abnormal output in s3 is incorrect, the state of the safety device displayed on the confirmation screen does not match the actual state of the safety device at that time. In addition, in the confirmation screen, a diagram of wiring is shown in which the output channels estimated to have an abnormality in s3 are marked with "x".

Therefore, the operator or the like confirms whether the state of the safety device displayed on the confirmation screen and the actual state of the safety device match each other, and if they match, it can be judged that an abnormality has occurred in the output channel marked with "x" in the diagram of wiring of the confirmation screen. In addition, if the state of the safety device displayed on the confirmation screen does not match the actual state of the safety device, it can be judged that an abnormality has occurred in the output channel that is not marked with "×" in the diagram of wiring of the confirmation screen.

Accordingly, this confirmation screen allows the operator to quickly specify, among the safety devices belonging to the safety device group 3 connected to the safety controller 1, the safety device in which an abnormality has occurred and the content of the abnormality that has occurred. Thereby, the stop time of the line is suppressed.

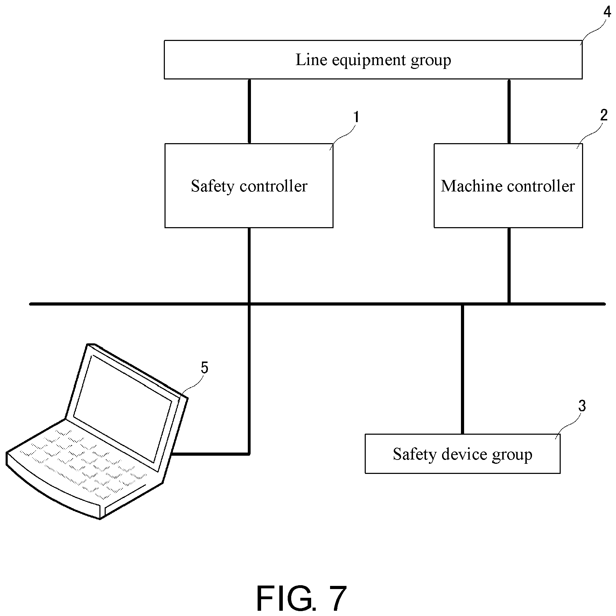

In addition, in the above example, the safety device group 3 is connected to the safety device connection I/F 12 of the safety controller 1, but as shown in FIG. 7, the safety device group 3 may be connected to the network. In this case, the information processing device 5 may acquire the output of the safety device from the safety controller 1 as in the above example, or may directly acquire the output from the safety device via the network.

Besides, even in the configuration shown in FIG. 7, the safety controller 1 acquires each output of the safety devices belonging to the safety device group 3 and judges whether the safety of workers on the line is ensured. The safety controller 1 controls the FA system according to the judgment result.

### [Reference Signs List]

- 1: safety controller
- 2: machine controller
- 3: safety device group
- 4: line equipment group
- 5: information processing device
- 11: control unit
- 12: safety device connection interface
- 13: line equipment connection interface
- 14: network connection interface
- 31: emergency stop button
- 32: safety light curtain
- 33: safety mat
- 41: press machine
- 42: cutter
- 43: industrial robot
- 51: control unit
- 51a: determination unit
- 51b: estimation unit
- 52: characteristic information storage unit
- 53: display unit
- 53a: display
- 54: operation unit
- 55: network connection unit

## Claims

1. An abnormality detection device (5) configured to detect an abnormality of a safety device (31, 32, 33) which is connectable to a safety controller (1) and has a plurality of channels for outputting a signal to the safety controller (1) according to a state, comprising:
a connection unit (55), configured to connect with the safety controller (1);
a determination unit (51a) configured to acquire, via the connection unit, an output of each of the plurality of channels of the safety device (31, 32, 33) from the safety controller (1), and configured to determine whether an abnormality occurs in the safety device (31, 32, 33) depending on whether the output of each of the plurality of channels is the same;
an estimation unit (51b) configured to estimate, for the safety device (31, 32, 33) for which occurrence of the abnormality has been determined by the determination unit (51a), the channel having an abnormal output;
a display unit (53) configured to display, on a display (53a), a screen comprising an image showing a diagram of wiring between the safety controller (1) and the safety device (31, 32, 33) for which the occurrence of the abnormality has been determined by the determination unit (51a), wherein the channel estimated to have the abnormal output by the estimation unit (51b) is distinguished from other channels in the image; and
a characteristic information storage unit (52) configured to store characteristic information indicating a relationship between the state of the safety device (31, 32, 33) and the output of each channel,
wherein for the safety device (31, 32, 33) for which the occurrence of the abnormality has been determined by the determination unit (51a), the estimation unit (51b) is configured to use the stored characteristic information to estimate the channel having the abnormal output.

2. The abnormality detection device (5) according to claim 1, wherein for the channel of the safety device (31, 32, 33) for which the occurrence of the abnormality has been determined by the determination unit (51a), the display unit (53) is configured to display a screen comprising an image showing the output of the channel on the display (53a).

3. An abnormality detection method for detecting an abnormality of a safety device (31, 32, 33) that is connected to a safety controller (1) and has a plurality of channels for outputting a signal to the safety controller (1) according to a state executed by a computer, comprising:
a connecting step to connect with the safety controller (1);
a determination step (s1) of acquiring an output of each of the plurality of channels of the safety device (31, 32, 33) from the safety controller (1), and determining whether an abnormality occurs in the safety device (31, 32, 33) depending on whether the output of each of the plurality of channels is the same;
an estimation step (s3) of estimating, for the safety device (31, 32, 33) for which occurrence of the abnormality has been determined, the channel having an abnormal output;
a display step (s4) of displaying, on a display (53a), a screen comprising an image showing a diagram of wiring between the safety controller and the safety device (31, 32, 33) for which the occurrence of the abnormality has been determined in the determination step, wherein the channel estimated to have the abnormal output in the estimation step is distinguished from other channels in the image; and
a storing step of storing characteristic information indicating a relationship between the state of the safety device (31, 32, 33) and the output of each channel,
wherein, for the safety device (31, 32, 33) for which the occurrence of the abnormality has been determined, the stored characteristic information is used to estimate the channel having the abnormal output.

4. An abnormality detection program for detecting an abnormality of a safety device (31, 32, 33) that is connected to a safety controller (1) and has a plurality of channels for outputting a signal to the safety controller (1) according to a state, the abnormality detection program causing a computer to execute:
a connecting step to connect with the safety controller (1);
a determination step (s1) of acquiring an output of each of the plurality of channels of the safety device (31, 32, 33) from the safety controller (1), and determining whether an abnormality occurs in the safety device (31, 32, 33) depending on whether the output of each of the plurality of channels is the same;
an estimation step (s3) of estimating, for the safety device (31, 32, 33) for which occurrence of the abnormality has been determined in the determination step, the channel having an abnormal output;
a display step (s4) of displaying, on a display (53a), a screen comprising an image showing a diagram of wiring between the safety controller (1) and the safety device (31, 32, 33) for which the occurrence of the abnormality has been determined in the determination step, wherein the channel estimated to have the abnormal output in the estimation step is distinguished from other channels in the image; and
a storing step of storing characteristic information indicating a relationship between the state of the safety device (31, 32, 33) and the output of each channel,
wherein, for the safety device (31, 32, 33) for which the occurrence of the abnormality has been determined, the stored characteristic information is used to estimate the channel having the abnormal output.

## Patentansprüche

1. Anomalie-Erfassungsvorrichtung (5), die konfiguriert ist, um eine Anomalie einer Sicherheitsvorrichtung (31, 32, 33) zu erfassen, die mit einer Sicherheitssteuerung (1) verbindbar ist und eine Vielzahl von Kanälen zum Ausgeben eines Signals an die Sicherheitssteuerung (1) gemäß eines Zustands aufweist, umfassend:
Eine Verbindungseinheit (55), die konfiguriert ist, um mit einer Sicherheitssteuerung (1) zu verbinden;
Eine Bestimmungseinheit (51a), die konfiguriert ist, über die Verbindungseinheit, eine Ausgabe von jedem der Vielzahl von Kanälen der Sicherheitsvorrichtung (31, 32, 33) von der Sicherheitssteuerung (1) zu erfassen, und konfiguriert ist, um zu bestimmen, ob eine Anomalie in der Sicherheitsvorrichtung (31, 32, 33) auftritt, abhängig davon, ob die Ausgabe von jedem der Vielzahl von Kanälen gleich ist;
Eine Schätzeinheit (51b), die konfiguriert ist, um zu schätzen, für die Sicherheitsvorrichtung (31, 32, 33) für die Auftreten einer Anomalie bestimmt worden ist durch die Bestimmungseinheit (51a), wobei der Kanal eine anomale Ausgabe aufweist;
Eine Anzeigeeinheit (53), die konfiguriert ist, um auf einer Anzeige (53a), einen Bildschirm anzuzeigen, der ein Bild umfasst, das ein Diagramm des Verdrahtens zwischen der Sicherheitssteuerung (1) und der Sicherheitsvorrichtung (31, 32, 33) zeigt, für die das Auftreten der Anomalie durch die Bestimmungseinheit (51a) bestimmt worden ist, wobei der Kanal, der durch Schätzeinheit (51b) geschätzt wird, eine anomale Ausgabe aufzuweisen, von den anderen Kanälen in dem Bild unterschieden wird; und
eine charakteristische Informationsspeichereinheit (52), die konfiguriert ist, um charakteristische Informationen zu speichern, die eine Beziehung zwischen dem Zustand der Sicherheitsvorrichtung (31, 32, 33) und der Ausgabe jedes Kanals anzeigen,
wobei die Sicherheitsvorrichtung (31, 32, 33) für die das Auftreten einer Anomalie durch die Bestimmungseinheit (51a) bestimmt worden ist, die Schätzeinheit (51b) konfiguriert ist, um die gespeicherten charakteristischen Informationen zu verwenden, um den Kanal zu schätzen, der eine anomale Ausgabe aufweist.

2. Anomalie-Erfassungseinheit (5) gemäß Anspruch 1, wobei für den Kanal der Sicherheitsvorrichtung (31, 32, 33) für den das Auftreten der Anomalie durch die Bestimmungseinheit (51a) bestimmt worden ist, die Anzeigeeinheit (53) konfiguriert ist, um einen Bildschirm anzuzeigen, der ein Bild umfasst, das die Ausgabe des Kanals auf der Anzeige (53a) anzeigt.

3. Anomalie-Erfassungsverfahren zum Erfassen einer Anomalie einer Sicherheitsvorrichtung (31, 32, 33), die mit einer Sicherheitssteuerung (1) verbunden ist und eine Vielzahl von Kanälen zum Ausgeben eines Signals an die Sicherheitssteuerung (1) gemäß einem Zustand aufweist, der durch einen Computer ausgeführt wird, umfassend:
einen Verbindungsschritt, um mit der Sicherheitssteuerung (1) zu verbinden;
einen Bestimmungsschritt (s1), um eine Ausgabe von jedem der Vielzahl von Kanälen der Sicherheitsvorrichtung (31, 32, 33) von der Sicherheitssteuerung (1) zu erfassen, und
Bestimmen, ob eine Anomalie in der Sicherheitsvorrichtung (31, 32, 33) auftritt, abhängig davon, ob die Ausgabe von jedem der Vielzahl von Kanälen die Gleiche ist;
Einen Schätzschritt (s3) des Schätzens, für die Sicherheitsvorrichtung (31, 32, 33) für die Auftreten der Anomalie bestimmt worden ist, wobei der Kanal eine anomale Ausgabe aufweist;
einen Anzeigeschritt (s4) des Anzeigens, auf einer Anzeige (53a), eines Bildschirms, umfassend ein Bild, das ein Diagramm des Verdrahtens zwischen der Sicherheitssteuerung und der Sicherheitsvorrichtung (31, 32, 33) zeigt, für die das Auftreten einer Anomalie in dem Bestimmungsschritt bestimmt worden ist, wobei der Kanal, der in dem Schätzschritt geschätzt wird, eine anomale Ausgabe aufzuweisen, sich in dem Bild von den anderen Kanälen unterscheidet; und
einen Speicherschritt des Speicherns von charakteristischen Informationen, die eine Beziehung zwischen dem Zustand der Sicherheitsvorrichtung (31, 32, 33) und der Ausgabe jedes Kanals anzeigen,
wobei, für die Sicherheitsvorrichtung (31, 32, 33) für die das Auftreten einer Anomalie bestimmt worden ist, die gespeicherten charakteristischen Informationen verwendet werden, um den Kanal zu schätzen, der eine anomale Ausgabe aufweist.

4. Anomalie-Erfassungsprogramm zum Erfassen einer Anomalie einer Sicherheitsvorrichtung (31, 32, 33), die mit einer Sicherheitssteuerung (1) verbunden ist, und eine Vielzahl an Kanälen zum Ausgeben eines Signals an eine Sicherheitssteuerung (1) aufweist, gemäß einem Zustand, wobei das Anomalie-Erfassungsprogramm einen Computer veranlasst auszuführen:
einen Verbindungsschritt, um mit einer Sicherheitssteuerung (1) zu verbinden;
einen Bestimmungsschritt (s1) des Aufnehmens einer Ausgabe von jedem der Vielzahl von Kanälen der Sicherheitsvorrichtung (31, 32, 33) von der Sicherheitssteuerung (1), und
bestimmen, ob eine Anomalie in der Sicherheitsvorrichtung (31, 32, 33) auftritt, abhängig davon, ob die Ausgabe von jedem der Vielzahl von Kanälen die Gleiche ist;
einen Schätzschritt (s3) des Schätzens, für die Sicherheitsvorrichtung (31, 32, 33), für die Auftreten der Anomalie in dem Bestimmungsschritt bestimmt worden ist, wobei der Kanal eine anomale Ausgabe aufweist;
einen Anzeigeschritt (s4) des Anzeigens, auf der Anzeige (53a), eines Bildschirms, der ein Bild umfasst, das ein Diagramm des Verdrahtens zwischen der Sicherheitssteuerung (1) und der Sicherheitsvorrichtung (31, 32, 33) anzeigt, für die das Auftreten der Anomalie in dem Bestimmungsschritt bestimmt worden ist, wobei der Kanal, der in dem Schätzschritt geschätzt wird, eine anomale Ausgabe aufzuweisen, sich von den anderen Kanälen in dem Bild unterscheidet; und
einen Speicherschritt des Speicherns von charakteristischen Informationen, die eine Beziehung zwischen dem Zustand der Sicherheitsvorrichtung (31, 32, 33) und der Ausgabe von jedem Kanal anzeigen,
wobei die Sicherheitsvorrichtung (31, 32, 33) für die das Auftreten der Anomalie bestimmt worden ist, die gespeilerten charakteristischen Informationen verwendet werden, um den Kanal zu schätzen, der die anomale Ausgabe aufweist.

## Revendications

1. Dispositif de détection d'anomalie (5) configuré pour détecter une anomalie d'un dispositif de sécurité (31, 32, 33) qui peut être connecté à un contrôleur de sécurité (1) et qui possède une pluralité de canaux pour émettre un signal vers le contrôleur de sécurité (1) selon un état, comprenant :
une unité de connexion (55), configurée pour se connecter au contrôleur de sécurité (1) ;
une unité de détermination (51a) configurée pour acquérir, via l'unité de connexion, une sortie de chacun de la pluralité de canaux du dispositif de sécurité (31, 32, 33) à partir du contrôleur de sécurité (1), et configurée pour déterminer si une anomalie se produit dans le dispositif de sécurité (31, 32, 33) selon que la sortie de chacun de la pluralité de canaux est la même ;
une unité d'estimation (51b) configurée pour estimer, pour le dispositif de sécurité (31, 32, 33) pour lesquels l'apparition de l'anomalie a été déterminée par l'unité de détermination (51a), le canal ayant une sortie anormale ;
une unité d'affichage (53) configurée pour afficher, sur un affichage (53a), un écran comprenant une image montrant un schéma de câblage entre le contrôleur de sécurité (1) et le dispositif de sécurité (31, 32, 33) pour lequel l'apparition de l'anomalie a été déterminée par l'unité de détermination (51a), dans lequel le canal estimé avoir la anormale sortie par l'unité d'estimation (51b) est distinguée des autres canaux dans l'image ; et
une unité de mémorisation d'informations caractéristiques (52) configurée pour mémoriser des informations caractéristiques indiquant une relation entre l'état du dispositif de sécurité (31, 32, 33) et la sortie de chaque canal,
dans lequel pour le dispositif de sécurité (31, 32, 33) pour lequel l'apparition de l'anomalie a été déterminée par l'unité de détermination (51a), l'unité d'estimation (51b) est configurée pour utiliser les informations caractéristiques mémorisées pour estimer le canal ayant la sortie anormale.

2. Dispositif de détection d'anomalie (5) selon la revendication 1, dans lequel pour la voie du dispositif de sécurité (31, 32, 33) pour laquelle l'apparition de l'anomalie a été déterminée par l'unité de détermination (51a), l'unité d'affichage (53) est configuré pour afficher un écran comprenant une image montrant la sortie du canal sur l'écran (53a).

3. Procédé de détection d'anomalie permettant de détecter une anomalie d'un dispositif de sécurité (31, 32, 33) qui est connecté à un contrôleur de sécurité (1) et possède une pluralité de canaux pour émettre un signal vers le contrôleur de sécurité (1) selon un état exécuté par un ordinateur, comprenant :
une étape de connexion pour se connecter au contrôleur de sécurité (1) ;
une étape de détermination (s1) consistant à acquérir une sortie de chacun de la pluralité de canaux du dispositif de sécurité (31, 32, 33) provenant du contrôleur de sécurité (1), et déterminer si une anomalie se produit dans le dispositif de sécurité (31, 32, 33) selon que la sortie de chacun de la pluralité de canaux est le même;
une étape d'estimation (s3) consistant à estimer, pour le dispositif de sécurité (31, 32, 33) pour lequel l'apparition de l'anomalie a été déterminée, le canal ayant une sortie anormale ;
une étape d'affichage (s4) consistant à afficher, sur un affichage (53a), un écran comprenant une image montrant un schéma de câblage entre le contrôleur de sécurité et le dispositif de sécurité (31, 32, 33) pour lequel l'apparition de l'anomalie a été déterminé lors de l'étape de détermination, le canal estimé comme ayant la sortie anormale lors de l'étape d'estimation étant distingué des autres canaux dans l'image ; et
une étape de mémorisation consistant à mémoriser des informations caractéristiques indiquant une relation entre l'état du dispositif de sécurité (31, 32, 33) et la sortie de chaque canal, dans lequel, pour le dispositif de sécurité (31, 32, 33) pour lequel l'apparition de l'anomalie a été déterminée, les informations caractéristiques mémorisées sont utilisées pour estimer le canal ayant la sortie anormale.

4. Programme de détection d'anomalies pour détecter une anomalie d'un dispositif de sécurité (31, 32, 33) qui est connecté à un contrôleur de sécurité (1) et comporte une pluralité de canaux pour émettre un signal vers le contrôleur de sécurité (1) selon un état, le programme de détection d'anomalie faisant exécuter par un ordinateur :
une étape de connexion pour se connecter au contrôleur de sécurité (1) ;
une étape de détermination (s1) consistant à acquérir une sortie de chacun de la pluralité de canaux du dispositif de sécurité (31, 32, 33) à partir du contrôleur de sécurité (1), et déterminer si une anomalie se produit dans le dispositif de sécurité (31, 32, 33) selon que la sortie de chacun de la pluralité de canaux est la même ;
une étape d'estimation (s3) consistant à estimer, pour le dispositif de sécurité (31, 32, 33) pour lequel l'apparition de l'anomalie a été déterminée lors de l'étape de détermination, le canal ayant une sortie anormale ;
une étape d'affichage (s4) consistant à afficher, sur un affichage (53a), un écran comprenant une image montrant un schéma de câblage entre le contrôleur de sécurité (1) et le dispositif de sécurité (31, 32, 33) pour lequel l'apparition de l'anomalie a été déterminée lors de l'étape de détermination, dans lequel le canal estimé comme ayant la sortie anormale lors de l'étape d'estimation est distingué des autres canaux dans l'image ; et
une étape de mémorisation consistant à mémoriser des informations caractéristiques indiquant une relation entre l'état du dispositif de sécurité (31, 32, 33) et la sortie de chaque canal, dans lequel, pour le dispositif de sécurité (31, 32, 33) pour lequel l'apparition de l'anomalie a été déterminée, les informations caractéristiques mémorisées sont utilisées pour estimer le canal présentant la sortie anormale.
